# EUROPÄISCHE PATENTSCHRIFT

(11) **EP 2 885 457 B1**
(45) Veröffentlichungstag und Bekanntmachung des Hinweises auf die Patenterteilung: **27.07.2016**
(21) Anmeldenummer: 13747838.4
(22) Anmeldetag: 09.08.2013
(51) Int. Cl.: D21F 3/10

(54) **WALZE UND VERFAHREN ZUR HERSTELLUNG UND/ODER VERARBEITUNG EINER PAPIER-, KARTON- ODER TISSUEBAHN**
ROLL AND METHOD FOR PRODUCING AND/OR PROCESSING A PAPER, CARDBOARD OR TISSUE WEB
ROULEAU ET PROCÉDÉ POUR LA PRODUCTION ET/OU LA TRANSFORMATION D'UNE BANDE DE PAPIER, DE CARTON OU DE PAPIER OUATÉ

(30) Priorität: 15.08.2012 DE 102012214530
(43) Veröffentlichungstag der Anmeldung: 24.06.2015
(73) Patentinhaber: Voith Patent GmbH, 89522 Heidenheim (DE)
(72) Erfinder: ERKELENZ, March, 89231 Neu-Ulm (DE); HONOLD, Jochen, 86825 Schlingen (DE)
(86) Internationale Anmeldenummer: PCT/EP2013/066672
(87) Internationale Veröffentlichungsnummer: WO 2014/026914

(56) Entgegenhaltungen:
- WO-A1-2007/003698
- WO-A1-2012/110320
- US-A- 2 290 777
- US-A- 2 969 837

## Beschreibung

Die Erfindung betrifft eine Walze mit einer Dichteinrichtung zur Abdichtung einer Über- oder Unterdruckzone der Walze gemäß dem Oberbegriff des Patentanspruchs 1 sowie ein Verfahren zur Herstellung und/oder Verarbeitung einer Papier-, Karton- oder Tissuebahn gemäß dem Oberbegriff des Patentanspruchs 16

Dichteinrichtungen in besaugten oder beblasenen Walzen für Papier-, Karton- oder Tissuemaschinen müssen die Über- oder Unterdruckzone zuverlässig gegen die Umgebung in der Normaldruck herrscht abdichten. Hierbei wird zur Abdichtung der Überdruck- oder Unterdruckzone die Dichtfläche jeder Dichtleiste der Dichteinrichtung gegen die Innenseite des rotierenden Walzenmantels angestellt. Um den Verschleiß der Dichtleiste hervorgerufen durch Reibung zwischen der Mantelfläche und der Dichtfläche zu reduzieren wird versucht ein Schmiermittel zwischen die Dichtfläche und die Innenseite einzubringen. Dies wird gewöhnlich mit Spritzrohren gemacht, in Drehrichtung der Walze vor der ersten Dichtleiste der Über- oder Unterdruckzone angeordnet sind. Hierbei wird das Schmiermittel auf die Innenseite des Walzenmantels aufgebracht von dieser durch dessen Rotation zu den einzelnen Dichtleisten befördert, wodurch die in Drehrichtung betrachtet die Schmiermittelversorgung von Dichtleiste zu Dichtleiste abnimmt. Um die in Drehrichtung nachfolgenden Dichtleisten dennoch mit genügend Schmiermittel zu versorgen, muss eine große Menge an Schmiermittel verwendet werden, welches aber nur zum geringen Teil der eigentlichen Schmierung der Dichtleisten zu Gute kommt und sonst zur nicht gewünschten Rückbefeuchtung der Faserstoffbahn beiträgt.

Zur Lösung dieses Problems schlägt eine Erfindung der Anmelderin vor, das Schmiermittel direkt zu der die Dichtfläche bereitstellenden Oberseite der jeweiligen Dichtleiste zu leiten, um damit jede einzelne Dichtleiste gezielt mit der benötigten Menge an Schmiermittel zu versorgen. Eine bevorzugte Ausgestaltung dieser Erfindung schlägt hier ferner eine an der Oberseite der Walze bereitgestellte Schmiermittelrinne in Form einer neben der Dichtfläche angeordneten sich in Längsrichtung der Dichtleiste, d.h. in Maschinenquerrichtung der Walze, erstreckenden nutartigen Vertiefung vor. Überraschenderweise wurde gefunden, dass auch durch im Vergleich zu üblichen Mengen mit geringen Mengen an Schmiermittel eine ausreichende Schmierung erzielt werden kann. Erste Versuche der Anmelderin der o.g. Erfindung wurden mit Dichtleisten mit einer an beiden längsseitigen Enden der Dichtleiste offenen Schmiermittelrinne durchgeführt. Ähnliche Dichtleisten mit offenen längsseitigen Enden sind auch aus der US 2 969 837 bekannt. Es zeigt sich, dass mit dieser Konfiguration zwar die Schmierleistung bei deutlich geringerem Schmiermittelverbrauch deutlich verbessert werden kann, dass aber unter gewissen Umständen eine über die Länge der Dichtleiste unregelmäßige Schmierwirkung erzielt wird, die nur durch Erhöhung -die zwar unter dem bekannten Niveau liegt- der Schmiermittelmenge ausgeglichen werden kann.

Es ist daher die Aufgabe der vorliegenden Erfindung eine zumindest eine Dichtleiste umfassende Dichteinrichtung vorzuschlagen, bei der der Schmiermittelverbrauch weiter reduziert werden kann bei gleichzeitig homogener Schmierwirkung über die Länge der Dichtleiste betrachtet.

Die Aufgabe wird gelöst durch eine Walze mit einer Dichteinrichtung zur Abdichtung einer Über- oder Unterdruckzone der Walze und mit einem gegenüber der Dichteinrichtung bewegbaren Walzenmantel, wobei die Dichteinrichtung eine in ihrer Länge durch zwei Enden begrenzte Dichtleiste mit einer Oberseite umfasst und die Oberseite eine Dichtfläche und einer an die Dichtfläche anschließenden Schmiermittelrinne bereitstellt, wobei die Schmiermittelrinne durch zumindest eine nutartige sich in Längsrichtung der Dichtleiste erstreckende Vertiefung in der Dichtleiste gebildet wird und die Dichtfläche und die Öffnung der nutartigen Vertiefung zur Innenseite des Walzenmantels weisen, wobei die Schmiermittelrinne an zumindest einer zumindest abschnittweise innerhalb der Dichtleiste verlaufenden Versorgungsleitung angeschlossen ist, mittels welcher ein Schmiermittel zwischen die Innenseite des Walzenmantels und die Dichtfläche bringbar ist. Die Erfindung ist dadurch gekennzeichnet, dass die Dichtleiste im Bereich ihrer beiden Enden jeweils eine Wandung hat, welche die Schmiermittelrinne in ihrer Länge abschließen.

Dadurch, dass die Schmiermittelrinne in ihrer Länge beidseitig abgeschlossen ist, ist diese wannenartig ausgebildet, wodurch sich ein über die Länge der Schmiermittelrinne gleichmäßiger Pegel an Schmiermittel einstellen kann und die Schmiermittelrinne eine Art Speicher für das Schmiermittel bildet. Hierdurch kann auch bei variierender Abgabe von Schmiermittel durch die Versorgungsleitung ein im Wesentlichen konstanter Schmiermittelpegel gehalten werden kann. Hierdurch kann die Menge an benötigtem Schmiermittel weiter reduziert und die Notlaufeigenschaften bei kurzfristigem Ausfall der Schmiermittelversorgung verbessert werden. Hierdurch werden nicht nur die Betriebskosten hervorgerufen durch Schmiermittelverbrauch deutlich reduziert, sondern es wird auch die Rückbefeuchtung der der Faserstoffbahn, insbesondere Papier-, Karton- oder Tissuebahn deutlich verringert, da zur Erzielung einer ausreichenden Schmierwirkung absolut weniger Schmiermittel eingesetzt werden muss und durch die endseitig geschlossene Schmiermittelrinne weniger Schmiermittel ungenutzt abläuft und über Bohrungen im Walzenmantel zur Faserstoffbahn gelangen kann.

Vorteilhafte Ausgestaltungen und Weiterbildungen der Erfindung sind in den Unteransprüchen angegeben.

Vorzugsweise erstreckt sich die Schmiermittelrinne im Wesentlichen über die gesamte Länge der Dichtleiste. Im Wesentlichen soll hierbei bedeuten, dass sich die Schmiermittelrinne über zumindest 90% der Länge der Dichtleiste erstreckt. Hierbei kann sich die Schmiermittelrinne ununterbrochen erstrecken. Vorzugsweise haben die beiden die Schmiermittelrinne in ihrer Länge begrenzenden Wandungen eine Stärke - in Längsrichtung der Dichtleiste betrachtet- von maximal 20 cm, bevorzugt maximal 10cm. Bei einer üblichen Dichtleiste kann dies bedeuten, dass sich die Schmiermittelrinne über mehrere Meter erstreckt, wohingegen sich die beiden Wandungen an den Enden der Dichtleiste jeweils über maximal 20 cm, insbesondere maximal 10 cm erstrecken.

Um den Aufbau der Dichteinrichtung hinsichtlich dem Anschluss der Versorgungsleitung an die Dichtleiste einfach zu gestalten und dennoch eine gleichmäßige Ausbringung des Schmiermittels über die Länge der Dichtleiste zu gewährleisten, sieht eine bevorzugte Ausgestaltung der Erfindung vor, dass die Versorgungsleitung einen sich innerhalb der Dichtleiste entlang deren Längsrichtung erstreckenden zentralen Versorgungskanal sowie zumindest eine, vorzugsweise mehrere die Schmiermittelrinne und den zentralen Versorgungskanal miteinander verbindende Steigleitung(en) umfasst über welche die Schmiermittelrinne durch in der Schmiermittelrinne endende Austrittsöffnungen der jeweiligen Steigleitung mit dem Schmiermittel gespeist wird. Gemäß dieser Ausgestaltung kann der zentrale Versorgungskanal durch eine oder wenige Zuleitungen mit dem Schmiermittel gespeist werden. Der zentrale Versorgungskanal verteilt dann das Schmiermittel an mehrere Steigleitungen - wobei die Anzahl der Steigleitungen deutlich größer als die Anzahl der Zuleitungen ist. Denkbar sind in diesem Zusammenhang, dass in Längsrichtung der Dichtleiste betrachtet etwa alle 5 bis 500mm eine Austrittsöffnung angeordnet ist.

Um die Ausbringung der Menge an Schmiermittel weiter besser vergleichmäßigen zu können und hierbei eine konstruktiv und fertigungstechnische Lösung bereitzustellen sieht eine weitere vorteilhafte Ausgestaltung der Erfindung vor, dass der zentrale Versorgungskanal entlang seiner Längserstreckung eine sich ändernde Querschnittsfläche und/oder Querschnittsgeometrie hat. Besonders einfach lässt sich ein solcher zentraler Versorgungskanal mit variierendem Querschnitt herstellen, indem bspw. in den Grundkörper der Dichtleiste zuerst eine zu einer der langen Seiten des Grundkörpers hin offene Nut, bspw. U-förmige Nut eingebracht wird, deren Öffnung dann mit Dichtleistenmaterial dann teilweise bspw. mittels eines die Breite und Länge aber nicht Tiefe der Nut nachbildenden Profilkörpers verschlossen wird. Dieser Profilkörper kann dann bspw. durch Verklebung an dem Grundkörper befestigt werden und zusammen mit diesem einen Kanal ausbilden, welcher den zentralen Versorgungskanal bereitstellt.

Um eine effektive Schmierwirkung zu erzielen sieht eine bevorzugte Ausgestaltung der Erfindung vor, dass die Dichtfläche und die Schmiermittel Rinne derart an der Oberseite angeordnet sind, dass bei bestimmungsgemäßem Einbau der Dichteinrichtung in die Walze in der vorgesehenen Drehrichtung des Walzenmantels betrachtet, die Schmiermittelrinne dem wesentlichen Teil der Dichtfläche, insbesondere dass die Schmiermittelrinne der gesamten Dichtfläche vorgelagert ist. Hierdurch wird erreicht, dass die Innenseite des Walzenmantels direkt bevor diese auf die Dichtfläche oder zumindest den wesentlichen Teil der Dichtfläche aufläuft, mit dem Schmiermittel benetzt wird.

Wenn im Rahmen dieser Anmeldung von bestimmungsgemäßem Betrieb der Dichteinrichtung in der Walze die Rede ist, soll darunter der Betriebszustand verstanden werden, indem die Dichtleiste mit seiner Dichtfläche derart gegen die Innenseite des Walzenmantels angestellt ist und dass eine Dichtwirkung erzielt wird.

Eine weitere bevorzugte Ausgestaltung der Erfindung sieht vor, dass die Dichtleiste in deren Breite durch eine vordere- und eine hintere Stirnseite begrenzt ist und sich die Oberseite der Dichtleiste zwischen der vorderen- und der hinteren Stirnseite erstreckt, wobei die vordere - und hintere Stirnseite sowie die Dichtfläche und die Schmiermittelrinne derart angeordnet sind, dass bei bestimmungsgemäßem Einbau der Dichteinrichtung in die Walze und in der vorgesehenen Drehrichtung des Walzenmantels betrachtet, der Walzenmantel im Bereich der vorderen Stirnseite auf die Dichtleiste aufläuft zuerst die Schmiermittelrinne und anschließend die Dichtfläche überstreicht um im Bereich der Rückseite von der Dichtleiste abläuft.

In einer Schnittebene senkrecht zur Längserstreckung der Dichtleiste betrachtet weist die Schmiermittelrinne ein die tiefste Stelle der Schmiermittelrinne bildendes Bett mit einer sich zur vorderen Stirnseite erstreckenden vorderen Seitenwandung und einer sich zur Dichtfläche erstreckenden hinteren Seitenwandung auf. Hierbei grenzt die Oberkante der vorderen Seitenwandung insbesondere an die vordere Stirnseite an und die Oberkante der hinteren Seitenwandung grenzt insbesondere an die Dichtfläche an. Vorzugsweise ist vorgesehen, dass bei bestimmungsgemäßem Einbau der Dichteinrichtung in eine Walze eine die beiden Oberkanten miteinander verbindende Gerade mit der Horizontalen einen Winkel von 1°-89° einnimmt, insbesondere einen Winkel von 15° oder mehr und 80° oder weniger.

Hierdurch bildet die die beiden Oberkanten miteinander verbindende Gerade eine Art keilförmigen Spalt zwischen der Oberseite der Dichtleiste und der Innenseite des Walzenmantels, welcher an der vorderen Stirnseite am größten ist und sich zur Dichtfläche hin verjüngt. Hierdurch wird durch die mit dem drehenden Walzenmantel mitgerissene Luft eine Sogwirkung erzielt, welche das Schmiermittel mit in den Spalt zwischen Innenseite des Walzenmantels und Dichtfläche hineinzieht.

Nach einer konkreten Ausgestaltung der Erfindung erstreckt sich bei bestimmungsgemäßem Einbau und Betrieb der Dichteinrichtung in der Walze in radialer Richtung der Walze betrachtet, die hintere Stirnseite dann näher zur Innenseite des Walzenmantels als die vordere Stirnseite, insbesondere, erstreckt sich die hintere Stirnseite bis zur Innenseite des Walzenmantels wohingegen sich die vordere Stirnseite nicht bis zur Innenseite des Walzenmantels erstreckt.

Nach einer möglichen Ausgestaltung der Erfindung erstrecken sich die Vorder- und die Rückseite der Dichtleiste im Wesentlichen parallel zueinander.

Eine weitere bevorzugte Ausgestaltung der Erfindung sieht vor, dass die Dichteinrichtung einen Dichtleistenhalter zur Halterung der Dichtleiste umfasst, wobei der Dichtleistenhalter einen Halteabschnitt mit zumindest einer Führungsfläche hat an der die Dichtleiste mit zumindest einer der beiden Seiten von Vorder- und Rückseite verschiebbar gelagert ist, wodurch die Dichtleiste bei bestimmungsgemäßem Einbau der Dichteinrichtung in die Walze entlang einer Wegstrecke in radialer Richtung der Walze betrachtet von und zur Innenseite der Walzenmantelfläche hin und weg verschiebbar ist, wobei die Versorgungsleitung an zumindest einer Stelle an einer der beiden Stirnseiten aus der Dichtleiste herausgeführt ist und wobei der Halteabschnitt zumindest eine Aussparung hat, durch welche der aus der Stirnseite der Dichtleiste herausgeführte Anschnitt der Versorgungsleitung durch den Dichtleistenhalter hindurch geführt wird, wobei die zumindest eine Aussparung derart ausgebildet ist, dass die Dichtleiste zusammen mit dem herausgeführten Abschnitt der Versorgungsleitung relativ zum Dichtleistenhalter entlang der Wegstrecke bewegbar ist.

Denkbar ist, dass die zumindest eine Aussparung lochförmig oder als nach oben offene Nut ausgebildet ist.

Vorzugsweise ist vorgesehen, dass der außerhalb der Dichtleiste, aber innerhalb der Walze verlaufende Teil der Versorgungsleitung einen biegesteifen ersten Leitungsabschnitt und einen relativ dazu biegeflexiblen zweiten Leitungsabschnitt hat, bzw. daraus gebildet ist. Hierbei ist der biegeflexible zweite Leitungsabschnitt wesentlich kürzer als der biegesteifere erste Leitungsabschnitt.

Durch den biegeflexiblen, kurzen zweiten Leitungsabschnitt wird in radialer Richtung der Walze eine freie Verschiebbarkeit der Dichtleiste relativ zum Dichtleistenhalter zur Innenseite des Walzenmantels hin oder von dieser weg gewährleistet. Der erste Leitungsabschnitt des innerhalb der Walze aber außerhalb der Dichtleiste verlaufenden Teils der Versorgungsleitung kann biegefest und damit stabil ausgeführt werden. Bei der Auslegung und Anordnung des biegeflexiblen zweiten Leitungsabschnitts ist insbesondere darauf zu achten, dass dieser so verläuft, dass dieser nicht bei der Bewegung der Dichtleiste an Bauteilen innerhalb der Walze scheuert. Für den ersten Leitungsabschnitt können bspw. Stahlrohre verwendet werden. Für den zweiten Leitungsabschnitt kann bspw. ein Gummischlauch verwendet werden, welcher bspw. mit einem Stahlgeflecht verstärkt sein kann.

Denkbar ist insbesondere, dass der biegesteife erste Leitungsabschnitt an dem zumindest einen Walzenende beginnt und sich in der Walze in Richtung der Dichtleiste erstreckt. Denkbar ist ferner, dass der biegeflexible zweite Leitungsabschnitt maximal einen Meter beabstandet von der zumindest einen Stelle beginnt an der die Versorgungsleitung aus der Dichtleiste geführt ist. Um zumindest den Verschleißweg der Dichtleiste nachführen zu können ist insbesondere denkbar, dass der biegeflexible zweite Leitungsabschnitt eine Länge im Bereich von 15cm bis 200cm hat, insbesondere eine Länge im Bereich von 20cm bis 200cm.

Denkbar ist ferner dass jedes der beiden Walzenenden einen Walzendeckel umfasst und die Versorgungsleitung an zumindest einem der Walzendeckel aus der Walze geführt wird.

Vorzugsweise beginnt der biegeflexible zweite Leitungsabschnitt an der Stelle, an der die Versorgungsleitung aus der Dichtleiste geführt wird.

Die Versorgungsleitung weist vorzugsweise einen mit der Dichtleiste integralen oder unlösbar verbundenen vierten Leitungsabschnitt -zum vierten Leitungsabschnitt kann bspw. der zentrale Versorgungskanal und die zumindest eine Steigleitung gehörensowie einen lösbar mit dem vierten Leitungsabschnitt verbundenen dritten Leitungsabschnitt auf, der außerhalb der Dichtleiste verläuft und vorzugsweise zu zumindest einem der beiden Walzenenden geführt ist. Hierdurch wird es ermöglicht, dass die Dichtleiste bspw. bei deren Austausch oder Wartung einfach an die Schmiermittelversorgung angeschlossen und von dieser wieder getrennt werden kann.

Vorzugsweise ist hierbei im Bereich der zumindest einen Stelle an der die Verbindungsleitung aus der Dichtleiste herausgeführt wird, zumindest ein Verbindungselement, bspw. in Form einer durch einen O-Ring abgedichteten Hülse, vorgesehen, mittels dem der dritte mit den vierten Leitungsabschnitt lösbar miteinander verbunden sind, d.h. gemäß dieser Ausführungsform erstreckt sich der vierte Leitungsabschnitt im Wesentlichen innerhalb der Dichtleiste und endet an dem Verbindungselement. Der dritte Leitungsabschnitt ist dann außerhalb der Dichtleiste geführt und ist mit dem vierten Leitungsabschnitt lösbar über das zumindest eine Verbindungselement verbunden. Es ist durchaus möglich, dass der vierte Leitungsabschnitt innerhalb der Dichtleiste derart verzweigt verläuft, dass dieser an mehreren bspw. in Längsrichtung der Dichtleiste nebeneinander angeordneten Stellen aus der Dichtleiste geführt ist. In diesem Fall ist dann vorzugsweise im Bereich jeder Stelle an der ein Ast des vierten Leitungsabschnitts aus der Dichtleiste geführt ist ein Verbindungselement angeordnet mittels dem der jeweilige Ast mit dem dritten Leitungsabschnitt verbunden ist.

Vorzugsweise setzt sich der dritte Leitungsabschnitt aus dem ersten und zweiten Leitungsabschnitt zusammen.

Bei dem Schmiermittel handelt es sich vorzugsweise um im Wesentlichen Wasser. Der Begriff "im Wesentlichen" bezieht sich hierbei auf die eventuelle Möglichkeit der Zugabe von Schmierstoff-Additiven zum Wasser, wobei Wasser immer den Hauptbestandteil (bezogen auf Volumen-%) einer solchen Mischung darstellt.

Nach einem weiteren unabhängigen Aspekt der Erfindung wird ein Verfahren zur Herstellung und/oder Verarbeitung einer Papier,- Karton- oder Tissuebahn mit einer Papier,- Karton- oder Tissuemaschine vorgeschlagen, bei dem die Papier,- Karton-oder Tissuebahn mit einer Produktionsgeschwindigkeit von 500 Meter pro Minute oder mehr hergestellt oder verarbeitet wird und die Bahn zusammen mit einer Papiermaschinenbespannung zumindest abschnittweise über zumindest eine Walze mit einem gelochten Walzenmantel und zumindest einer Über- oder Unterdruckzone geführt wird, wobei die Über- oder Unterdruckzone durch zumindest eine Dichteinrichtung mit zumindest einer Dichtleiste abgedichtet wird und zumindest eine der zumindest einen Dichtleiste eine zur Innenseite des Walzenmantels weisende Oberseite hat, die eine gegen die Innenseite des Walzenmantels angestellte Dichtfläche und zumindest eine Schmiermittelaustrittsöffnung bereitstellt, wobei mittels der Schmiermittelaustrittsöffnung ein Schmiermittel zwischen der Dichtfläche und die Innenseite des Walzenmantels eingebracht wird. Das erfinderische Verfahren ist dadurch gekennzeichnet, dass die pro Meter Maschinenbreite und pro Minute verwendete Menge an Schmiermittel vier Liter oder weniger, insbesondere drei Liter oder weniger, insbesondere 1 Liter oder weniger beträgt.

Die Erfinder habe herausgefunden, dass Dichtleisten bei denen das Schmiermittel an der zur Innenseite des Walzenmantels weisenden Oberseite ausgegeben wird nicht nur eine bessere Schmierwirkung mit weniger Verschleiß der Dichtfläche der Dichtleiste erzielt wird, sondern, dass bei Produktionsgeschwindigkeiten (auch Maschinengeschwindigkeiten genannt) von 500 Meter pro Minute oder mehr, der Verbrauch an Schmiermittel, insbesondere im Wesentlichen Wasser, von oftmals 10-15 Liter pro Meter Maschinenbreite und Minute auf unter einen Liter oder weniger pro Meter Maschinenbreite und Minute reduziert werden kann. Hierdurch werden nicht nur die Betriebskosten hervorgerufen durch Schmiermittelverbrauch deutlich reduziert sondern wird auch die Rückbefeuchtung der der Papier-, Karton- oder Tissuebahn deutlich verringert werden. Die Erfinder haben erkannt, dass durch die Kombination von Maschinengeschwindigkeiten von 500 Meter pro Minute oder mehr und Verwendung von zumindest einer Dichtleisten mit Schmierung im Bereich der Dichtleistenoberseite durch den Sogeffekt bei den hohen Produktionsgeschwindigkeiten die Schmierwirkung weiter derart gesteigert werden kann, dass zur ausreichenden Schmierung eine Schmiermittelmenge von einem Liter pro Meter Maschinenbreite und pro Minute ausreichen.

Bei dem Schmiermittel handelt es sich vorzugsweise um im Wesentlichen Wasser. Der Begriff "im Wesentlichen" bezieht sich hierbei auf die eventuelle Möglichkeit der Zugabe von Schmierstoff-Additiven zum Wasser, wobei Wasser immer den Hauptbestandteil (bezogen auf Volumen-%) einer solchen Mischung darstellt.

Versuche der Anmelderin habe darüber hinaus unerwarteter Weise gezeigt, dass auch der Energieverbrauch um mehr als 5% reduziert werden kann, hervorgerufen durch die deutlich effizientere Schmierung der Reibpaarung Dichtfläche der Dichtleiste und Innenseite des Walzenmantels.

Vorzugsweise beträgt die Produktionsgeschwindigkeit 700 Meter pro Minute oder mehr.

Um die Schmierwirkung weiter zu verbessern schlägt eine Weiterbildung des erfindungsgemäßen Verfahrens vor, bei dem Verfahren eine Walze nach einem der Ansprüche 1-15 zu verwenden.

Vorzugsweise sind sämtliche Dichtleisten der Dichteinrichtung mit einer zur Innenseite des Walzenmantels weisenden Oberseite ausgestattet, die eine Dichtfläche und eine Schmiermittelaustrittsöffnung für das Schmiermittel bereitstellt, durch welche jeweils separat und unabhängig Schmiermittel zwischen die jeweilige Dichtfläche und die Innenseite des Walzenmantels eingebracht wird.

Die Erfindung wird nachfolgend anhand von schematischen nicht maßstabsgetreuen Zeichnungen weiter erläutert. Es zeigen
- Figur 1: eine Dichtleiste einer erfindungsgemäßen Dichteinrichtung in Draufsicht,
- Figur 2: eine erfindungsgemäße Walze in einer Schnittebene senkrecht zur Längserstreckung der Walze mit der Dichtleiste aus Figur 1
und
- Figur 3: einen Ausschnitt der Walze der Figur 2 im Bereich eines ihrer längsseitigen Enden in Draufsicht.

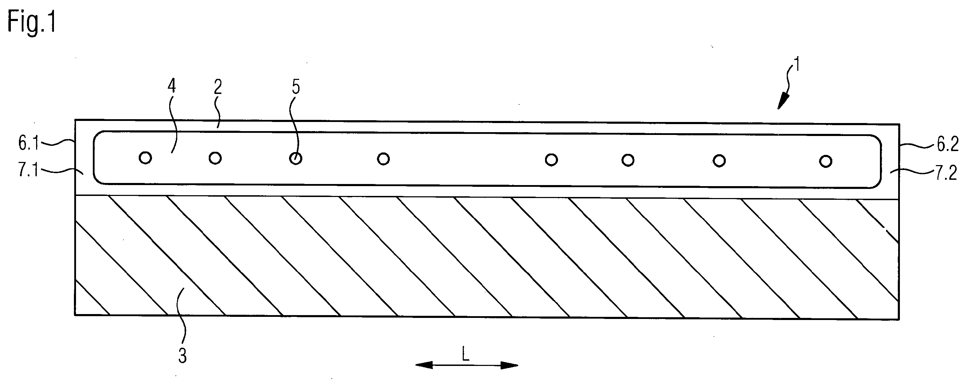

Die Figur 1 zeigt eine Dichtleiste 1 einer erfindungsgemäßen Dichteinrichtung in Draufsicht auf die Oberseite 2 der Dichtleiste 1, welche bei bestimmungsgemäßem Einbau der Dichteinrichtung in eine Walze zur Innenseite eines rotierbaren Walzenmantels zeigt.

Die Oberseite 2 der Dichtleiste 1 stellt eine schraffiert gezeichnete Dichtfläche 3 und eine an die Dichtfläche 3 angrenzende Schmiermittelrinne 4 bereit, wobei die Schmiermittelrinne durch zumindest eine nutartige sich in Längsrichtung L der Dichtleiste 1 erstreckende Vertiefung in der Dichtleiste gebildet ist und bei bestimmungsgemäßem Einbau der Dichteinrichtung in die Walze die Dichtfläche 3 und die Öffnung der Schmiermittelrinne 4 zur Innenseite des Walzenmantels weisen. Anzumerken ist an dieser Stelle, dass bei bestimmungsgemäßen Einbau der Dichteinrichtung 9 in die Walze 8 die Längsrichtung L der Dichtleiste 1 und die Längsrichtung der Walze zusammenfallen und jeweils für sich sowie gemeinsam mit dem Bezugszeichen L bezeichnet sind. Unter der Länge der Dichtleiste 1 ist deren maximale Erstreckung in Längsrichtung L zu verstehen.

Wie aus der Darstellung der Figur 1 zu entnehmen ist, enden in der Schmiermittelrinne 4 eine Vielzahl in Längsrichtung der Schmiermittelrinne 4 hintereinander angeordnete Schmiermittelaustrittsöffnungen 5 einer Versorgungsleitung 12 zur Schmiermittelversorgung. Die Dichtleiste 1 ist in ihrer Länge durch zwei Enden 6.1 und 6.2 begrenzt. Die erfindungsgemäße Dichtleiste 1 weist im Bereich ihrer beiden Enden 6.1. und 6.2 jeweils eine die Schmiermittelrinne 4 in ihrer Länge begrenzende Wandung 7.1 und 7.2 auf. Die Dichtleiste 1 hat eine Länge von mehreren Metern und jede der beiden Wandungen 7.1 und 7.2 hat -in Längsrichtung L der Dichtleiste 1 betrachtet- eine Stärke von 20cm oder weniger, insbesondere 10cm oder weniger.

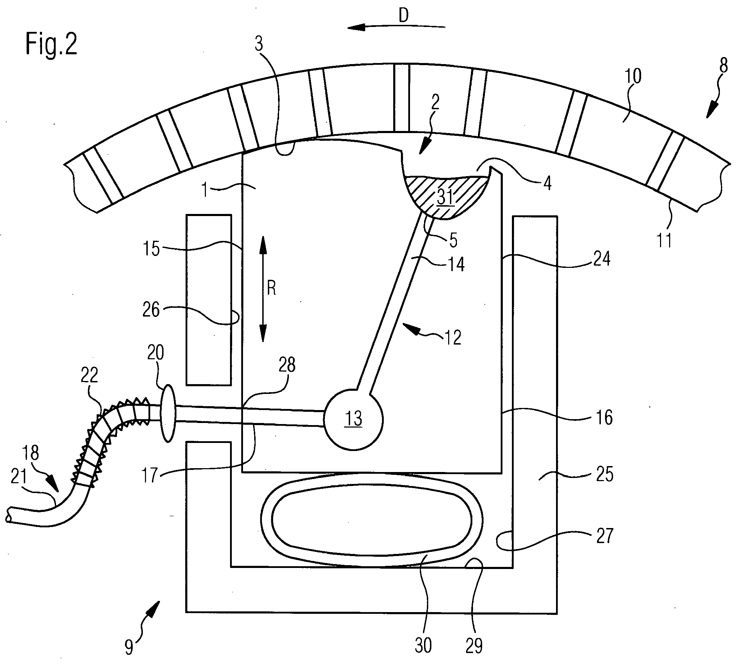

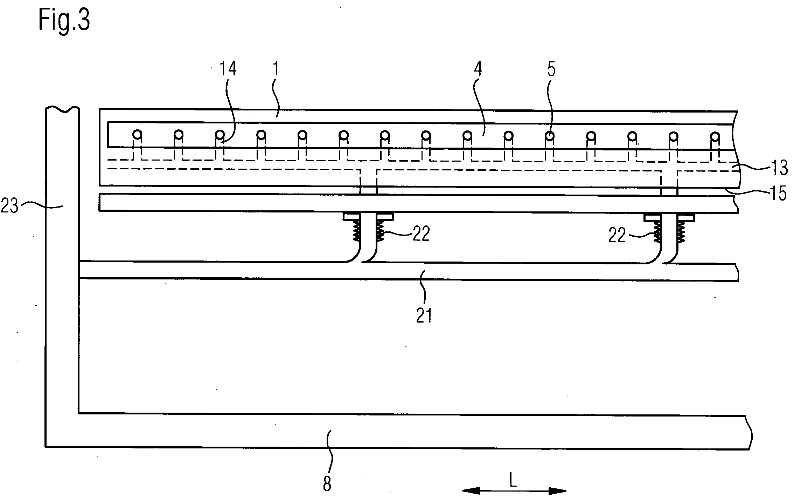

Die Figur 2 zeigt eine erfindungsgemäße Walze 8 in einer Schnittebene senkrecht zur Längserstreckung L der Walze 1. In die Walze 8 ist eine erfindungsgemäße Dichteinrichtung 9 mit der in der Figur 1 gezeigten Dichtleiste 1 bestimmungsgemäß eingebaut. Die Figur 2 zeigt die Dichteinrichtung 9 mit der Dichtleiste 1 in der Position in welcher deren Dichtfläche 3 zur Abdichtung einer nicht gezeigten Über- oder Unterdruckzone gegen die Innenseite 11 des Walzenmantels 10 angestellt ist. Die Figur 3 zeigt ein längsseitiges Walzenende in Draufsicht ohne Darstellung des Walzenmantels, wobei innerhalb der Walze 8 verlaufende Bauteile mit gestrichelten Linien gezeichnet sind.

Die Schmiermittelrinne 4 ist an eine abschnittweise innerhalb der Dichtleiste 1 verlaufenden Versorgungsleitung 12 angeschlossen, welche dichtleistenseitig an den Schmiermittelaustrittsöffnungen 5 endet und mittels welcher Schmiermittel 31, welches sich in der Schmiermittelrinne 4 befindet zwischen die Innenseite 11 des Walzenmantels 10 und die Dichtfläche 3 bringbar ist.

Wie aus der Darstellung der Figur 2 zu entnehmen ist, sind die Dichtfläche 3 und die Schmiermittelrinne 4 derart an der Oberseite 2 angeordnet, dass bei bestimmungsgemäßem Einbau der Dichteinrichtung 9 in die Walze 8 und bei Drehung des Walzenmantels 10 in der vorgesehenen Drehrichtung D, die Schmiermittelrinne dem wesentlichen Teil, vorliegend sogar der gesamten Dichtfläche 3 vorgelagert ist.

Die Dichtleiste 1 ist in deren Breite B durch eine vordere Stirnseite 24 und eine dazu im Wesentlichen parallel verlaufende hintere Stirnseite 15 begrenzt, zwischen denen sich die Oberseite 2 der Dichtleiste 1 erstreckt. Hierbei sind die vordere -und hintere Stirnseite 24, 15 sowie die Dichtfläche 3 und die Schmiermittelrinne 4 derart angeordnet, dass bei dem in der Figur 2 gezeigten bestimmungsgemäßem Einbau der Dichteinrichtung 9 in die Walze 8 und bei Drehung des Walzenmantels in der vorgesehenen Drehrichtung D betrachtet, der Walzenmantel 10 im Bereich der vorderen Stirnseite 24 auf die Dichtleiste 1 aufläuft zuerst den Schmiermittelrinne 4 und anschließend die Dichtfläche 3 überstreicht um im Bereich der hinteren Stirnseite 15 von der Dichtleiste 1 abläuft.

Ferner erkennt man, dass sich die hintere Stirnseite 15 in radialer Richtung R der Walze 8 betrachtet, näher zur Innenseite 11 des Walzenmantels 10 erstreckt als die vordere Stirnseite 24, wodurch im Bereich der vorderen Stirnseite 24 ein Einlaufspalt zwischen der Oberseite 2 der Dichtleiste 1 und der Innenseite 11 des Walzenmantels 10 gebildet wird.

Die Dichteinrichtung 9 umfasst ferner einen Dichtleistenhalter 25 zur Halterung der Dichtleiste 1. Hierbei hat der Dichtleistenhalter 25 vorliegend einen Halteabschnitt mit zwei Führungsflächen 26, 27 an denen die Dichtleiste mit ihren beiden Seiten 15, 24 von vorderer- oder hinterer Stirnseite verschiebbar in radialer Richtung R der Walze 8 entlang einer Wegstrecke von und zur Innenseite 11 der Walzenmantelfläche 10 verschiebbar gelagert ist. Der Dichtleistenhalter 25 hat ferner einen Boden 29 an dem sich ein mit einem Druckmedium wie bspw. Luft befüllbarer Balg 30 abstützt und mittels dem die Dichtleiste 1 relativ zum Dichtleistenhalter 25 in Richtung R bewegbar ist.

Man erkennt ferner, dass die Versorgungsleitung 12 an zumindest einer Stelle 28 an der hinteren Stirnseite 15 aus der Dichtleiste 1 herausgeführt ist. Um eine freie Verschiebbarkeit der Dichtleiste 1 relativ zum Dichtleistenhalter 25 in radialer Richtung R der Walze 8 betrachtet zu gewährleisten, hat der Halteabschnitt zumindest eine lochförmig ausgebildete Aussparung 32, durch welche der jeweils aus der hinteren Stirnseite 15 der Dichtleiste 1 herausgeführte Abschnitt der Versorgungsleitung 12 durch den Dichtleistenhalter 25 hindurch geführt wird.

Wie aus der Darstellung der Figur 2 zu erkennen ist, umfasst die Versorgungsleitung 12 einen innerhalb der Dichtleiste geführten Abschnitt sowie einen außerhalb der der Dichtleiste 1 geführten Abschnitt. Der innerhalb der Dichtleiste 1 geführte Abschnitt der Versorgungsleitung 12 umfasst einen sich in Längsrichtung L der Dichtleiste 1 erstreckende zentralen Versorgungskanal 13 von dem mehrere in Längsrichtung L der Dichtleiste 1 hintereinander angeordnete Steigleitungen 14 ausgehen, die jeweils an einer Schmiermittelaustrittsöffnung 5 in der Schmiermittelrinne 4 enden. Von dem zentralen Versorgungskanal 13 gehen eine oder mehrere vorliegend waagerecht geführte Leitungsabschnitte weg, die an der hinteren Stirnseite 15 der Dichtleiste 1 aus dieser geführt ist bzw. sind. Denkbar ist, dass der zentrale Versorgungskanal 13 entlang seiner Längserstreckung L eine sich ändernde Querschnittsfläche und/oder Querschnittsgeometrie hat.

Der außerhalb der Dichtleiste 1 aber innerhalb der Walze 8 verlaufende Abschnitt der Versorgungsleitung 12 umfasst einen ersten Leitungsabschnitt 21 und einen zweiten Leitungsabschnitt 22, wie in den Figuren 2 und 3 gezeigt. Hierbei ist der erste Leitungsabschnitt 21 länger als der zweite Leitungsabschnitt 22 und der zweite Leitungsabschnitt 22 ist im Vergleich zum ersten Leitungsabschnitt 21 biegeflexibel ausgebildet. Vorliegend wird der zweite Leitungsabschnitt 22 durch einen geflochtenen Metallschlauch 22 gebildet. Ferner beginnt der zweite Leitungsabschnitt 22 in einem Bereich von maximal einen Meter gerechnet von der Stelle 28, an der die Versorgungsleitung 12 aus der Dichtleiste 1 geführt ist und hat vorzugsweise eine Länge von 20-100cm, bevorzugt bis zu 80cm. Der erste Leitungsabschnitt 21 endet an seinem einen längsseitigen Ende an einem bspw. als Walzendeckel ausgebildeten längsseitigen Walzenende 23 und an seinem anderen längsseitigen Ende an einem Verbindungsstück 20.

Der erste und der zweite Leitungsabschnitt 21, 22 bilden zusammen einen dritten Leitungsabschnitt 18. Der innerhalb der Dichtleiste 1 verlaufende Teil der Versorgungsleitung 12 sowie ein kurzes Leitungsstück, das zwischen dem zentralen Versorgungskanal 13 und der Stelle 28 verläuft, bilden einen vierten Leitungsabschnitt 17. Der vierte Leitungsabschnitt 17 ist unlösbar mit der Dichtleiste 1 verbunden und integraler Bestandteil mit dieser. Der vierte Leitungsabschnitt 17 wird hierbei, da dieser fester Bestandteil der Dichtleiste 1 ist, beim Aus- und Einbau der Dichtleiste 1 mit aus- bzw. eingebaut. Der dritte und der vierte Leitungsabschnitt 18, 17 sind über das Verbindungselement 20 lösbar miteinander verbunden.

## Patentansprüche

1. Walze (8) mit einer Dichteinrichtung (9) zur Abdichtung einer Über- oder Unterdruckzone der Walze (8) und mit einem gegenüber der Dichteinrichtung (9) bewegbaren Walzenmantel (10), wobei die Dichteinrichtung (9) eine Dichtleiste (1) mit einer Oberseite (2) umfasst, welche eine Dichtfläche (3) und eine an die Dichtfläche (3) anschließende, durch zumindest eine nutartige sich in Längsrichtung der Dichtleiste (1) erstreckende Vertiefung in der Dichtleiste (1) gebildeten Schmiermittelrinne (4) bereitstellt, wobei die Dichtfläche (3) und die Öffnung der nutartigen Vertiefung zur Innenseite (11) des Walzenmantels (10) weisen, wobei der Schmiermittelrinne (4) an zumindest einer zumindest abschnittweise innerhalb der Dichtleiste (1) verlaufenden Versorgungsleitung (12) angeschlossen ist, mittels welcher Schmiermittel (31) zwischen die Innenseite (11) des Walzenmantels (10) und die Dichtfläche (3) bringbar ist, wobei die Dichtleiste (1) in ihrer Länge durch zwei Enden (6.1, 6.2) begrenzt wird, **dadurch gekennzeichnet dass** die Dichtleiste (1) im Bereich ihrer beiden Enden (6.1, 6.2) jeweils eine die Schmiermittelrinne (4) in ihrer Länge begrenzende Wandung (7.1, 7.2) aufweist.

2. Walze (8) nach Anspruch 1, **dadurch gekennzeichnet, dass** sich die Schmiermittelrinne (4) über einen Mittenabschnitt der Dichtleiste (1) erstreckt und in ihrer Länge durch die Wandungen (7.1, 7.2) begrenzt wird, wobei der Mittenabschnitt eine Länge von mehreren Metern und jede der beiden Wandungen (7.1, 7.2) eine Länge von 20cm oder weniger, insbesondere 10cm oder weniger hat.

3. Walze (8) nach Anspruch 1 oder 2, **dadurch gekennzeichnet, dass** die Versorgungsleitung (12) einen sich innerhalb der Dichtleiste (1) entlang deren Längsrichtung erstreckenden zentralen Versorgungskanal (13) sowie zumindest eine den Schmiermittelrinne (4) und den zentralen Versorgungskanal (13) miteinander verbindende Steigleitung (14) umfasst.

4. Walze (8) nach Anspruch 3, **dadurch gekennzeichnet, dass** der zentrale Versorgungskanal (13) entlang seiner Längserstreckung eine sich ändernde Querschnittsfläche und/oder Querschnittsgeometrie hat.

5. Walze (8) nach zumindest einem der vorangehenden Ansprüche, **dadurch gekennzeichnet, dass** die Dichtfläche (3) und die Schmiermittelrinne (4) derart an der Oberseite (2) angeordnet sind, dass in der vorgesehenen Drehrichtung des Walzenmantels (10)betrachtet, die Schmiermittelrinne (4) dem wesentlichen Teil, insbesondere der gesamten Dichtfläche (3) vorgelagert ist.

6. Walze (8) nach zumindest einem der vorangehenden Ansprüche, **dadurch gekennzeichnet, dass** die Dichtleiste (1) in deren Breite durch eine vordereund eine hintere Stirnseite (15, 24) begrenzt ist, zwischen denen sich die Oberseite (2) der Dichtleiste (1) erstreckt, wobei die vordere -und hintere Stirnseite (15, 24) sowie die Dichtfläche (3) und die Schmiermittelrinne (4) derart angeordnet sind, dass in der vorgesehenen Drehrichtung des Walzenmantels (10) betrachtet, der Walzenmantel (10) im Bereich der vorderen Stirnseite (24) auf die Dichtleiste (1) aufläuft zuerst den Schmiermittelrinne (4) und anschließend zumindest den wesentlichen Teil der Dichtfläche (3), insbesondere die gesamte Dichtfläche (3), überstreicht um im Bereich der hinteren Stirnseite (15) von der Dichtleiste (1) abzulaufen.

7. Walze (8) nach Anspruch 6, **dadurch gekennzeichnet, dass** die beiden Seiten im Wesentlichen parallel zueinander verlaufen.

8. Walze (8) nach Anspruch 6 oder 7 , **dadurch gekennzeichnet, dass** die Schmiermittelrinne (4) in einer Schnittebene senkrecht zur Längserstreckung der Dichtleiste (1) betrachtet eine tiefste Stelle hat von der sich in Richtung der vorderen Stirnseite (24) eine vordere Seitenwandung und in Richtung der Dichtfläche (3) eine hintere Seitenwandung erstreckt, wobei die Oberkante der vorderen Seitenwandung an die vordere Stirnseite (24) und die Oberkante der hinteren Seitenwandung an die Dichtfläche (3) angrenzt und wobei eine die beiden Oberkanten miteinander verbindende Gerade mit der Horizontalen einen Winkel von 1°-89° einnimmt, insbesondere einen Winkel zwischen 15° und 80°.

9. Walze (8) nach zumindest einem der Ansprüche 6 bis 8, **dadurch gekennzeichnet, dass** die Dichteinrichtung (9) einen Dichtleistenhalter (25) zur Halterung der Dichtleiste (1) umfasst, wobei der Dichtleistenhalter (25) einen Halteabschnitt mit zumindest einer Führungsfläche (26,27) hat an der die Dichtleiste (1) mit zumindest einer der beiden Seiten von vorderer- oder hinterer Stirnseite (15, 24) verschiebbar gelagert ist, wodurch die Dichtleiste (1) entlang einer Wegstrecke in radialer Richtung der Walze (8) betrachtet von und zur Innenseite (11) der Walzenmantelfläche verschiebbar ist, wobei die Versorgungsleitung (12) an zumindest einer Stelle (28) an zumindest einer der beiden Seiten von vorderer- und hinterer Stirnseite (15, 24) aus der Dichtleiste (1) herausgeführt ist und wobei der Halteabschnitt zumindest eine Aussparung (32) hat, durch welche der jeweils aus der zumindest einen Seite von vordereroder hinterer Stirnseite (15, 24) der Dichtleiste (1) herausgeführte Abschnitt der Versorgungsleitung (12) durch den Dichtleistenhalter hindurch geführt wird, und wobei die zumindest eine Aussparung (32) derart ausgebildet ist, dass die Dichtleiste (1) zusammen mit dem herausgeführten Abschnitt der Versorgungsleitung (12) relativ zum Dichtleistenhalter (25) entlang der Wegstrecke bewegbar ist.

10. Walze (8) nach Anspruch 9, **dadurch gekennzeichnet, dass** die zumindest eine Aussparung (32) lochförmig oder als nach oben offene Nut ausgebildet ist.

11. Walze (8) nach einem der vorherigen Ansprüche, **dadurch gekennzeichnet, dass** die Walze (8) für eine Maschine zur Herstellung oder Verarbeitung einer Faserstoffbahn geeignet ist, und die Versorgungsleitung (12) im Bereich zumindest eines längsseitigen Walzenendes der Walze (8) aus der Walze (8) geführt ist.

12. Walze (8) nach Anspruch 11, **dadurch gekennzeichnet dass** der innerhalb der Walze (8) verlaufende Teil der Versorgungsleitung (12) auf seiner außerhalb der Dichtleiste (1) geführten Länge einen ersten und zweiten Leitungsabschnitt (21,22) hat, wobei der erste Leitungsabschnitt (21) länger ist als der zweite Leitungsabschnitt (22) und der zweite Leitungsabschnitt (22) im Vergleich zum ersten Leitungsabschnitt (21) biegeflexibler ausgebildet ist.

13. Walze (8) nach Anspruch 12, **dadurch gekennzeichnet, dass** der erste Leitungsabschnitt (21) an dem zumindest einen Walzenende (23) beginnt und sich in der Walze (8) in Richtung der Dichtleiste (1) erstreckt und / oder der zweite Leitungsabschnitt (22) in einem Bereich von maximal einen Meter gerechnet von der Stelle beginnt, an der die Versorgungsleitung (12) aus der Dichtleiste (1) geführt ist.

14. Walze (8) nach einem der Ansprüche 12-13, **dadurch gekennzeichnet, dass** der biegeflexible zweite Leitungsabschnitt (22) eine Länge im Bereich von 15cm bis 200cm hat, insbesondere eine Länge im Bereich von 20cm bis 200cm.

15. Walze (8) nach einem der Ansprüche 12-14, **dadurch gekennzeichnet, dass** die Versorgungsleitung (12) einen mit der Dichtleiste (1) unlösbar verbundenen vierten Leitungsabschnitt (17) sowie einen lösbar mit dem vierten Leitungsabschnitt (17) verbundenen dritten Leitungsabschnitt (18) aufweist, wobei der dritte Leitungsabschnitt (18) aus dem ersten und dem zweiten Leitungsabschnitt (21,22) gebildet ist, und wobei die Versorgungsleitung (12) insbesondere im Bereich der zumindest einen Stelle an der diese aus der Dichtleiste (1) herausgeführt wird, ein Verbindungselement aufweist, mittels dem der dritte Leitungsabschnitt (18) und der vierte Leitungsabschnitt (17) lösbar miteinander verbunden sind.

16. Verfahren zur Herstellung und/oder Verarbeitung einer Papier,- Karton- oder Tissuebahn mit einer Papier,- Karton- oder Tissuemaschine, bei dem die Papier,- Karton- oder Tissuebahn zusammen mit einer Papiermaschinenbespannung zumindest abschnittweise über zumindest eine Walze (8) mit einem gelochten Walzenmantel (10) und zumindest einer Über-oder Unterdruckzone geführt wird, wobei die Über- oder Unterdruckzone durch eine Dichteinrichtung (9) mit zumindest einer Dichtleiste (1) abgedichtet wird und zumindest eine der zumindest einen Dichtleiste (1) eine zur Innenseite (11) des Walzenmantels (10) weisende Oberseite (2) hat, die im Dichtungsbetrieb eine gegen die Innenseite (11) des Walzenmantels (10) angestellte Dichtfläche (3) und zumindest eine Schmiermittelaustrittsöffnung (5) bereitstellt, wobei mittels der Schmiermittelaustrittsöffnung (5) ein Schmiermittel (31) zwischen der Dichtfläche (3) und die Innenseite (11) des Walzenmantels (10) eingebracht wird, **dadurch gekennzeichnet, dass** die Bahn mit einer Produktionsgeschwindigkeit von 500 Meter pro Minute oder mehr hergestellt oder verarbeitet wird und die pro Meter Maschinenbreite und pro Minute verwendete Menge an Schmiermittel (31) vier Liter oder weniger, insbesondere drei Liter oder weniger, insbesondere ein Liter oder weniger ist.

17. Verfahren nach Anspruch 16, **dadurch gekennzeichnet, dass** eine Walze (8) nach einem der Ansprüche 1-15 Verwendung findet.

18. Verfahren nach Anspruch 16 oder 17, **dadurch gekennzeichnet, dass** die Walze (8) eine Saugwalze ist, insbesondere eine Siebsaugwalze in der Formiersektion ist.

## Claims

1. Roller (8) having a sealing installation (9) for sealing a positive pressure zone or a negative pressure zone of the roller (8), and having a roller sleeve (10) which is movable in relation to the sealing installation (9), wherein the sealing installation (9) has a sealing strip (1) having an upper side (2) which provides a sealing face (3) and a lubricant channel (4) which adjoins the sealing face (3) and which is formed by at least one groove-type depression in the sealing strip (1) that extends in the longitudinal direction of the sealing strip (1), wherein the sealing face (3) and the opening of the groove-type depression point to the internal side (11) of the roller sleeve (10), wherein the lubricant channel (4) is connected to at least one supply line (12) which at least in portions runs within the sealing strip (1) and by means of which lubricant (31) is deliverable between the internal side (11) of the roller sleeve (10) and the sealing face (3), the sealing strip (1) in the length thereof being delimited by two ends (6.1, 6.2), **characterized in that** the sealing strip (1) in the region of the two ends (6.1, 6.2) thereof in each case has one wall (7.1, 7.2) delimiting the lubricant channel (4) in the length thereof.

2. Roller (8) according to Claim 1, **characterized in that** the lubricant channel (4) extends across a central portion of the sealing strip (1) and in terms of length thereof is delimited by the walls (7.1, 7.2), wherein the central portion has a length of a plurality of metres, and each of the two walls (7.1, 7.2) has a length of 20 cm or less, in particular of 10 cm or less.

3. Roller (8) according to Claim 1 or 2, **characterized in that** the supply line (12) has a central supply duct (13) which within the sealing strip (1) extends along the longitudinal direction thereof, and at least one riser line (14) interconnecting the lubricant channel (4) and the central supply duct (13).

4. Roller (8) according to Claim 3, **characterized in that** the central supply duct (13) along the longitudinal extent thereof has a variable cross-sectional area and/or cross-sectional geometry.

5. Roller (8) according to at least one of the preceding claims, **characterized in that** the sealing face (3) and the lubricant channel (4) are disposed on the upper side (2) in such a manner that when viewed in the intended rotation direction of the roller sleeve (10) the lubricant channel (4) is upstream of the substantial part of the sealing face (3), particularly upstream of the entire sealing face (3).

6. Roller (8) according to at least one of the preceding claims, **characterized in that** the sealing strip (1) in the width thereof is delimited by a front end side (24) and a rear end side (15), the upper side (2) of the sealing strip (1) extending therebetween, wherein the front end side (24) and the rear end side (15) and the sealing face (3) and the lubricant channel (4) are disposed in such a manner that when viewed in the intended rotation direction of the roller sleeve (10), the roller sleeve (10) in the region of the front end side (24) runs onto the sealing strip (1), first sweeping the lubricant channel (4) and thereafter at least the substantial part of the sealing face (3), in particular the entire sealing face (3), so as to run off the sealing strip (1) in the region of the rear end side (15).

7. Roller (8) according to Claim 6, **characterized in that** the two sides run so as to be substantially mutually parallel.

8. Roller (8) according to Claim 6 or 7, **characterized in that** the lubricant channel (4) when viewed in a sectional plane which is perpendicular to the longitudinal extent of the sealing strip (1) has a deepest point from which a front side wall extends in the direction of the front end side (24), and a rear side wall extends in the direction of the sealing face (3), wherein the upper edge of the front side wall is contiguous to the front end side (24) and the upper edge of the rear side wall is contiguous to the sealing face (3), and wherein a straight line interconnecting the two upper edges in relation to the horizontal assumes an angle of 1° to 89°, in particular an angle between 15° and 80°.

9. Roller (8) according to at least one of Claims 6 to 8, **characterized in that** the sealing installation (9) comprises a sealing strip mount (25) for mounting the sealing strip (1), wherein the sealing strip mount (25) has a mounting portion having at least one guide face (26, 27) on which the sealing strip (1) by way of at least one of the two sides of front end side (24) or rear end side (15) is traversably mounted, on account of which the sealing strip (1) when viewed along a path in the radial direction of the roller (8) is traversable from and to the internal side (11) of the roller sleeve face, wherein the supply line (12) at least at one point (28) is routed out from the sealing strip (1) at least at one of the two sides of front end side (24) or rear end side (15), and wherein the mounting portion has at least one recess (32) through which that portion of the supply line (12) that in each case has been routed out from the at least one side of front end side (24) or rear end side (15) of the sealing strip (1) is routed through the sealing strip mount, and wherein the at least one recess (32) is configured in such a manner that the sealing strip (1) in relation to the sealing strip mount (25), conjointly with that portion of the supply line (12) that has been routed out, is movable along the path.

10. Roller (8) according to Claim 9, **characterized in that** the at least one recess (32) is configured in the shape of a bore, or as a groove which is upwardly open.

11. Roller (8) according to one of the preceding claims, **characterized in that** the roller (8) is suitable for a machine for manufacturing or processing a fibrous web, the supply line (12) in the region of at least one longitudinal roller end of the roller (8) being routed out from the roller (8).

12. Roller (8) according to Claim 11, **characterized in that** that part of the supply line (12) that runs within the roller (8) on the length thereof that is routed outside the sealing strip (1) has a first line portion (21) and a second line portion (22), the first line portion (21) being configured so as to be longer than the second line portion (22), and the second line portion (22) as compared with the first line portion (21) being configured so as to be more flexural.

13. Roller (8) according to Claim 12, **characterized in that** the first line portion (21) commences at the at least one roller end (23) and the roller (8) extends in the direction of the sealing strip (1), and/or the second line portion (22) commences in a region which is calculated to be at most one metre from the point at which the supply line (12) is routed out from the sealing strip (1).

14. Roller (8) according to one of Claims 12 to 13, **characterized in that** the flexural second line portion (22) has a length in the range from 15 cm to 200 cm, in particular has a length in the range from 20 cm to 200 cm.

15. Roller (8) according to one of Claims 12 to 14, **characterized in that** the supply line (12) has a fourth line portion (17) which is non-releasably connected to the sealing strip (1), and a third line portion (18) which is releasably connected to the fourth line portion (17), the third line portion (18) being formed from the first line portion (21) and the second line portion (22), and wherein the supply line (12) in particular in the region of the at least one point at which the former is routed out from the sealing strip (1) has a connection element by means of which the third line portion (18) and the fourth line portion (17) are releasably interconnected.

16. Method for manufacturing and/or processing a paper, cardboard, or tissue web, by way of a paper, cardboard, or tissue machine, in which the paper, cardboard, or tissue web, conjointly with a paper-machine clothing, is guided at least in portions over at least one roller (8) having a perforated roller sleeve (10) and at least one positive pressure zone or negative pressure zone, wherein the positive pressure zone or negative pressure zone is sealed by a sealing installation (9) having at least one sealing strip (1), and at least one of the at least one sealing strips (1) has an upper side (2) which points to the internal side (11) of the roller sleeve (10) and which during sealing operation provides a sealing face (3), which is placed against the internal side (11) of the roller sleeve (10), and at least one lubricant exit opening (5), wherein by means of the lubricant exit opening (5) a lubricant (31) is introduced between the sealing face (3) and the internal side (11) of the roller sleeve (10), **characterized in that** the web is manufactured or processed at a production rate of 500 metres per minute or more, and the amount of lubricant (31) used per metre of machine width and per minute is four litres or less, in particular is three litres or less, in particular is one litre or less.

17. Method according to Claim 16, **characterized in that** a roller (8) according to one of Claims 1 to 15 is used.

18. Method according to Claim 16 or 17, **characterized in that** the roller (8) is a suction roller, in particular a suction couch roller, in the forming section.

## Revendications

1. Rouleau (8) avec un dispositif d'étanchéité (9) destiné à assurer l'étanchéité d'une zone de surpression ou de dépression du rouleau (8) et avec une enveloppe de rouleau (10) déplaçable par rapport au dispositif d'étanchéité (9), dans lequel le dispositif d'étanchéité (9) comprend une baguette d'étanchéité (1) avec un côté supérieur (2), qui procure une face d'étanchéité (3) et une rigole à lubrifiant (4) se raccordant à la face d'étanchéité (3) et formée dans la baguette d'étanchéité (1) par au moins un creux en forme de rainure s'étendant dans la direction longitudinale de la baguette d'étanchéité (1), dans lequel la face d'étanchéité (3) et l'ouverture du creux en forme de rainure sont orientées vers le côté intérieur (11) de l'enveloppe de rouleau (10), dans lequel la rigole à lubrifiant (4) est raccordée à au moins une conduite d'alimentation (12) s'étendant au moins localement à l'intérieur de la baguette d'étanchéité (1), au moyen de laquelle du lubrifiant (31) peut être amené entre le côté intérieur (11) de l'enveloppe de rouleau (10) et la face d'étanchéité (3), dans lequel la baguette d'étanchéité (1) est limitée en longueur par deux extrémités (6.1, 6.2), **caractérisé en ce que** la baguette d'étanchéité (1) présente dans la région de ses deux extrémités (6.1, 6.2) respectivement une paroi (7.1, 7.2) limitant en longueur la rigole à lubrifiant (4).

2. Rouleau (8) selon la revendication 1, **caractérisé en ce que** la rigole à lubrifiant (4) s'étend sur une partie centrale de la baguette d'étanchéité (1) et est limitée en longueur par les parois (7.1, 7.2), dans lequel la partie centrale a une longueur de plusieurs mètres et chacune des deux parois (7.1, 7.2) a une longueur de 20 cm ou moins, en particulier de 10 cm ou moins.

3. Rouleau (8) selon la revendication 1 ou 2, **caractérisé en ce que** la conduite d'alimentation (12) comprend un canal d'alimentation central (13) s'étendant à l'intérieur de la baguette d'étanchéité (1) dans le sens de sa longueur ainsi qu'au moins une colonne montante (14) reliant l'une à l'autre la rigole à lubrifiant (4) et le canal d'alimentation central (13).

4. Rouleau (8) selon la revendication 3, **caractérisé en ce que** le canal d'alimentation central (13) présente dans le sens de son extension longitudinale une aire de section transversale et/ou une géométrie de section transversale qui varie.

5. Rouleau (8) selon au moins une des revendications précédentes, **caractérisé en ce que** la face d'étanchéité (3) et la rigole à lubrifiant (4) sont disposées sur le côté supérieur (2), de telle manière que, en considérant le sens de rotation prévu de l'enveloppe de rouleau (10), la rigole à lubrifiant (4) précède la partie essentielle, en particulier la totalité de la face d'étanchéité (3).

6. Rouleau (8) selon au moins une des revendications précédentes, **caractérisé en ce que** la baguette d'étanchéité (1) est limitée en largeur par un côté frontal avant et arrière (15, 24), entre lesquels s'étend le côté supérieur (2) de la baguette d'étanchéité (1), dans lequel le côté frontal avant et arrière (15, 24) ainsi que la face d'étanchéité (3) et la rigole à lubrifiant (4) sont disposés de telle manière que, en considérant le sens de rotation prévu de l'enveloppe de rouleau (10), l'enveloppe de rouleau (10) arrive sur la baguette d'étanchéité (1) dans la région du côté frontal avant (24), franchisse d'abord la rigole à lubrifiant (4) et ensuite au moins la partie essentielle de la face d'étanchéité (3), en particulier la totalité de la face d'étanchéité (3), pour quitter la baguette d'étanchéité (1) dans la région du côté frontal arrière (15).

7. Rouleau (8) selon la revendication 6, **caractérisé en ce que** les deux côtés sont essentiellement parallèles l'un à l'autre.

8. Rouleau (8) selon la revendication 6 ou 7, **caractérisé en ce que** la rigole à lubrifiant (4), en la considérant dans un plan de coupe perpendiculaire à l'extension longitudinale de la baguette d'étanchéité (1), comporte un endroit le plus profond à partir duquel une paroi latérale avant s'étend en direction du côté frontal avant (24) et une paroi latérale arrière s'étend en direction de la face d'étanchéité (3), dans lequel l'arête supérieure de la paroi latérale avant jouxte le côté frontal avant (24) et l'arête supérieure de la paroi latérale arrière jouxte la face d'étanchéité (3) et dans lequel une droite reliant l'une à l'autre les deux arêtes supérieures forme avec l'horizontale un angle de 1° à 89°, en particulier un angle compris entre 15° et 80°.

9. Rouleau (8) selon au moins une des revendications 6 à 8, **caractérisé en ce que** le dispositif d'étanchéité (9) comprend un support de baguette d'étanchéité (25) pour supporter la baguette d'étanchéité (1), dans lequel le support de baguette d'étanchéité (25) comporte une partie de maintien avec au moins une face de guidage (26, 27), sur laquelle la baguette d'étanchéité (1) est montée de façon coulissante avec au moins un des deux côtés du côté frontal avant ou arrière (15, 24), grâce à laquelle la baguette d'étanchéité (1), considérée le long d'un chemin en direction radiale du rouleau (8), peut coulisser vers le côté intérieur (11) de l'enveloppe de rouleau et inversement, dans lequel la conduite d'alimentation (12) est menée hors de la baguette d'étanchéité (1) en au moins un endroit (28) sur au moins un des deux côtés du côté frontal avant et arrière (15, 24), et dans lequel la partie de maintien présente au moins une découpe (32), à travers laquelle la partie de la conduite d'alimentation (12) menée respectivement hors dudit au moins un côté du côté frontal avant ou arrière (15, 24) de la baguette d'étanchéité (1) est guidée à travers le support de baguette d'étanchéité, et dans lequel ladite au moins une découpe (32) est configurée de telle manière que la baguette d'étanchéité (1) soit déplaçable par rapport au support de baguette d'étanchéité (25) le long du chemin de concert avec la partie de la conduite d'alimentation (12) menée à l'extérieur.

10. Rouleau (8) selon la revendication 9, **caractérisé en ce que** ladite au moins une découpe (32) est réalisée en forme de trou ou de rainure ouverte vers le haut.

11. Rouleau (8) selon l'une quelconque des revendications précédentes, **caractérisé en ce que** le rouleau (8) est adapté pour une machine de production ou de transformation d'une bande de matière fibreuse et la conduite d'alimentation (12) est menée hors du rouleau (8) dans la région d'au moins une extrémité de rouleau en direction longitudinale du rouleau (8).

12. Rouleau (8) selon la revendication 11, **caractérisé en ce que** la partie de la conduite d'alimentation (12) s'étendant à l'intérieur du rouleau (8) comprend sur sa longueur guidée à l'extérieur de la baguette d'étanchéité (1) une première et une deuxième partie de conduite (21, 22), dans lequel la première partie de conduite (21) est plus longue que la deuxième partie de conduite (22) et la deuxième partie de conduite (22) est plus flexible que la première partie de conduite (21).

13. Rouleau (8) selon la revendication 12, **caractérisé en ce que** la première partie de conduite (21) commence à ladite au moins une extrémité de rouleau (23) et s'étend dans le rouleau (8) en direction de la baguette d'étanchéité (1) et/ou la deuxième partie de conduite (22) commence dans une région d'un mètre maximum calculée à partir de l'endroit où la conduite d'alimentation (12) est menée hors de la baguette d'étanchéité (1).

14. Rouleau (8) selon une des revendications 12 ou 13, **caractérisé en ce que** la deuxième partie de conduite flexible (22) présente une longueur comprise dans la plage de 15 cm à 200 cm, en particulier une longueur comprise dans la plage de 20 cm à 200 cm.

15. Rouleau (8) selon l'une quelconque des revendications 12 à 14, **caractérisé en ce que** la conduite d'alimentation (12) présente une quatrième partie de conduite (17) assemblée de façon inséparable à la baguette d'étanchéité (1) ainsi qu'une troisième partie de conduite (18) assemblée de façon séparable à la quatrième partie de conduite (17), dans lequel la troisième partie de conduite (18) est formée de la première et de la deuxième parties de conduite (21, 22), et dans lequel la conduite d'alimentation (12) présente un élément d'assemblage, en particulier dans la région dudit au moins un endroit où celle-ci est menée hors de la baguette d'étanchéité (1), au moyen duquel la troisième partie de conduite (18) et la quatrième partie de conduite (17) sont assemblées l'une à l'autre de façon séparable.

16. Procédé de production et/ou de transformation d'une bande de papier, de carton ou de papier ouaté avec une machine à papier, à carton ou à papier ouaté, dans lequel on guide la bande de papier, de carton ou de papier ouaté en compagnie d'une toile de machine à papier au moins localement sur au moins un rouleau (8) présentant une enveloppe de rouleau perforée (10) et au moins une zone de surpression ou de dépression, dans lequel on assure l'étanchéité de la zone de surpression ou de dépression au moyen d'un dispositif d'étanchéité (9) avec au moins une baguette d'étanchéité (1) et au moins une de ladite au moins une baguette d'étanchéité (1) comporte un côté supérieur (2) orienté vers le côté intérieur (11) de l'enveloppe de rouleau (10), lequel procure en fonctionnement d'étanchéité une face d'étanchéité (3) appliquée contre le côté intérieur (11) de l'enveloppe de rouleau (10) et au moins une ouverture de sortie de lubrifiant (5), dans lequel on introduit un lubrifiant (31) entre la face d'étanchéité (3) et le côté intérieur (11) de l'enveloppe de rouleau (10) au moyen de l'ouverture de sortie de lubrifiant (5), **caractérisé en ce que** l'on produit ou on transforme la bande avec une vitesse de production de 500 mètres par minute ou plus et la quantité de lubrifiant (31) utilisée par mètre de largeur de la machine et par minute est de quatre litres ou moins, en particulier de trois litres ou moins, et en particulier d'un litre ou moins.

17. Procédé selon la revendication 16, **caractérisé en ce que** l'on utilise un rouleau (8) selon l'une quelconque des revendications 1 à 15.

18. Procédé selon la revendication 16 ou 17, **caractérisé en ce que** le rouleau (8) est un rouleau aspirant, en particulier un rouleau aspirant coucheur dans la section de formage.
